# EUROPÄISCHE PATENTSCHRIFT

(11) **EP 2 027 214 B1**
(45) Veröffentlichungstag und Bekanntmachung des Hinweises auf die Patenterteilung: **22.02.2012**
(21) Anmeldenummer: 07729169.8
(22) Anmeldetag: 15.05.2007
(51) Int. Cl.: C09B 67/20

(54) **VERWENDUNG VON HYPERVERZWEIGTEN POLYCARBONATEN ALS DISPERGIERMITTEL FÜR PIGMENTE**
USE OF HYPERBRANCHED POLYCARBONATES AS A DISPERSING AGENT FOR PIGMENTS
UTILISATION DE POLYCARBONATES HYPERRAMIFIES EN TANT QU'AGENTS DE DISPERSION POUR PIGMENTS

(30) Priorität: 23.05.2006 EP 06114393
(43) Veröffentlichungstag der Anmeldung: 25.02.2009
(73) Patentinhaber: BASF SE, 67056 Ludwigshafen (DE)
(72) Erfinder: BRUCHMANN, Bernd, 67251 Freinsheim (DE); GARCIA ESPINO, Andres Carlos, 68165 Mannheim (DE); KLÜGLEIN, Matthias, 67071 Ludwigshafen (DE); BEST, Wolfgang, 67251 Freinsheim (DE); JESSE, Joachim, 67256 Weisenheim (DE); SENS, Benno, 67434 Neustadt (DE)
(86) Internationale Anmeldenummer: PCT/EP2007/054721
(87) Internationale Veröffentlichungsnummer: WO 2007/135032

(56) Entgegenhaltungen:
- EP-A- 0 896 013
- EP-A- 1 018 504
- DE-A1- 10 116 767
- DE-A1-102004 051 455
- US-A1- 2001 020 056

## Beschreibung

Die vorliegende Erfindung betrifft die Verwendung von hochfunktionellen, hoch- oder hyperverzweigten Polycarbonaten, erhältlich durch
a) Herstellung eines oder mehrerer Kondensationsprodukte (K) entweder durch
   a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B), der mindestens 3 OH-Gruppen aufweist, unter Eliminierung von Alkoholen ROH, wobei es sich bei R jeweils unabhängig voneinander um einen geradkettigen oder verzweigten aliphatischen, aromatisch/aliphatischen oder aromatischen Kohlenwasserstoffrest mit 1 bis 20 C-Atomen handelt und die Reste R auch unter Bildung eines die Gruppierung -O[(CO)O]ₙ-enthaltenden Ringes miteinander verbunden sein können und n eine ganze Zahl von 1 bis 5 bedeutet,
      oder
      a2) Umsetzung von Phosgen, Diphosgen oder Triphosgen mit dem aliphatischen, aliphatisch/aromatischen oder aromatischen Alkohol (B) unter Freisetzung von Chlorwasserstoff,
      wobei das Mengenverhältnis der Alkohole (B) zu den Carbonaten (A) oder den Phosgenen im Reaktionsgemisch so gewählt wird, daß die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen, und
b) intermolekulare Umsetzung der Kondensationsprodukte (K),
   als Dispergiermittel für Pigmente.

Außerdem betrifft die Erfindung Pigmentzubereitungen, die als wesentliche Bestandteile (I) mindestens ein Pigment und (II) mindestens eines dieser Polycarbonate als Dispergiermittel enthalten, sowie die Herstellung dieser Pigmentzubereitungen und ihre Verwendung zur Einfärbung von flüssigen Anwendungsmedien und Kunststoffen.

Zur Dispergierung von Pigmenten in flüssigen Anwendungsmedien müssen mechanische Kräfte aufgebracht werden, deren Größe von der Benetzbarkeit des Pigments und seiner Affinität zu dem Anwendungsmedium abhängt. Um die Dispergierung zu erleichtern, werden üblicherweise Dispergiermittel eingesetzt, die gleichzeitig auch eine Reagglomeration der Pigmentteilchen sowie eine Ftockulatbildung verhindern und die erhaltene Pigmentdisperslon zusätzlich stabilisieren sollen. Die an die Dispergiermittel gestellten technischen Anforderungen sind sehr hoch, zumal in der Regel auch eine Breitbandverträglichkeit sowohl mit wasser- als auch mit lösungsmittelbasieremen Systemen sowie eine wirtschaftliche Zugänglichkeit gewünscht wird.

Als Dispergiermittel werden inzwischen auch Polymere vorgeschlagen, die eine hyperverzweigte oder auch dendrimere Struktur aufweisen. Die bislang für diesen Zweck beschriebenen Polymere basieren auf Polyamiden oder Polyesteraminen (EP-A-882 772 und 1 296 919), Polyethern (WO-A-03/62306), Polyurethanen (WO-A-02/81071 und 03/91347) und insbesondere Polyestern (EP-A-882 772 und 1 295 919 sowie WO-A-00/37542, 02/57004 und 04/37928).

Dendrimere Polyamide oder Polyester sind in Vielstufensynthesen sehr aufwendig und teuer herzustellen, wodurch die Möglichkeiten für ihren technischen Einsatz deutlich eingeschränkt werden. Die mehrstufige Synthese zu Polyether-Systernen Ober ringöffnende Polymerisation mit anschließender Kettenverlängerung bzw. Modfizierung mit Ethylen- oder Propylenoxid ist technisch sowie sicherheitstechnisch ebenfalls sehr aufwendig und mit hohen Kosten verbunden.

Hyperverzweigte Polymere auf Basis von Amiden, Estern, Esteramiden oder Polyurethanen, die zwar in einstufigen Prozessen herstellbar sind, weisen in der Regel jedoch hohe Elgenviskositäten auf und sind daher nur für eine eingeschränkte Zahl von Lösungsmitteln verwendbar, wodurch ihre Anwendungsmöglichkeiten erheblich reduziert sind.

Der Erfindung lag die Aufgabe zugrunde, Dispergiermittel bereitzustellen, die dem geforderten Anwendungsprofil genügen und insbesondere eine geringe Eigenviskosität sowie eine gute Verträglichkeit mit den verschiedensten Pigmenten und Lösungsmitteln aufweisen sowie auf Wirtschaftliche Weise zugänglich sind.

Demgemäß wurde die Verwendung der eingangs definierten hochlunktionellen, hoch- oder hyperverzweigten Polycarbonate als Dispergiermittel für Pigmente gefunden.

Die erfindungsgemäß verwendenden hochfunktionellen, hoch- oder hyperverzweigten Polycarbonate und ihre Herstellung sind aus der WO-A-2005/26234 bekannt. In der noch nicht veröffentlichten PCT/EP2006/060240 wird ihre Verwendung als Fließhilfsmittel beschrieben.

Unter hyperverzweigten Polycarbonaten werden dabei unvernetzte Makromoleküle mit Hydroxyl- und Carbonat- oder Carbamoylchloridgruppen verstanden, die sowohl strukturell als auch molekular uneinheitlich sind. Sie können, ausgehend von einem Zentralmolekül, analog zu Dendrimeren, jedoch mit uneinheitlicher Kettenlänge der Äste aufgebaut sein. Sie können jedoch auch linear mit funktionellen, verzweigten Seitengruppen aufgebaut sein. Schließlich können sie auch, als Kombination der beiden Extreme, lineare und verzweigte Molekülteile aufweisen.

"Hoch-" oder "hyperverzweigt" soll dabei erfindungsgemäß bedeuten, daß der Verzweigungsgrad (Degree of Branching, DB; s. auch Acta Polymerica 48, S. 30 ff (1997)), d.h., die mittlere Anzahl dendritischer Verknüpfungen plus die mittlere Anzahl der Endgruppen pro Molekül, dividiert durch die mittlere Anzahl der dendritischen Verknüpfungen plus die mittlere Anzahl der linearen Verknüpfungen plus die mittlere Anzahl der Endgruppen pro Molekül, 0,1 bis 0,99, bevorzugt 0,2 bis 0, 99, besonders bevorzugt 0,2 bis 0,95 beträgt.

Unter "dendrimer" soll erfindungsgemäß ein Verzweigungsgrad DB von 0,99 bis 1,0 verstanden werden.

Als Edukt für die den erfindungsgemäß zu verwendenden Polycarbonaten zugrundeliegenden Kondensationsprodukte (K) können Phosgen, Diphosgen oder Triphosgen, vorzugsweise Phosgen, eingesetzt werden (Verfahrensvariante a2)), besonders bevorzugt kommen jedoch organische Carbonate (A) der allgemeinen Formel RO[(CO)O]ₙR zum Einsatz (Verfahrensvariante a1)).

Bei den Resten R handelt es sich jeweils unabhängig voneinander um einen geradkettigen oder verzweigten aliphatischen, cycloaliphatischen, aromatisch/aliphatischen (araliphatischen) oder aromatischen Kohlenwasserstoffrest mit 1 bis 20 C-Atomen, vorzugsweise 1 bis 12 C-Atomen, insbesondere 1 bis 6 C-Atomen. Die beiden Reste R können auch unter Bildung eines die Gruppierung -O[(CO)O]ₙ- enthaltenden Ringes miteinander verbunden sein, die Reste R bedeuten in diesem Fall z.B. Ethylen oder 1,2- oder 1,3-Propylen. Die beiden Reste R können gleich oder unterschiedlich sein, vorzugsweise sind sie gleich. Bevorzugt handelt es sich um einen aliphatischen Kohlenwasserstoffrest, wobei ein geradkettiger oder verzweigter Alkylrest besonders bevorzugt und ein geradkettige Alkylrest mit 1 bis 4 C-Atomen besonders bevorzugt ist, oder um einen substituierten oder unsubstituierten Phenylrest.

Beispiele für geeignete Reste R sind Methyl, Ethyl, n-Propyl, Isopropyl, n-Butyl, Isobutyl, sek.-Butyl, tert.-Butyl, n-Hexyl, n-Heptyl, n-Octyl, 2-Ethylhexyl, n-Decyl, n-Dodecyl, n-Tetradecyl, n-Hexadecyl, n-Octadecyl, n-Eicosyl, Cyclopentyl, Cyclohexyl, Cyclooctyl, Cyclododecyl, Phenyl, o- und p-Tolyl und Naphthyl. Bevorzugt sind Methyl, Ethyl, n-Butyl und Phenyl.

n bedeutet eine ganze Zahl von 1 bis 5, bevorzugt von 1 bis 3, besonders bevorzugt von 1 bis 2.

Ganz besonders bevorzugt handelt es sich bei den Carbonaten um einfache Carbonate der allgemeinen Formel RO(CO)OR (n = 1).

Als Beispiele für geeignete aliphatische, aromatisch/aliphatische und aromatische, einfache Carbonate seien genannt: Dimethylcarbonat, Diethylcarbonat, Di-n-propylcarbonat, Di-n-butylcarbonat, Diisobutylcarbonat, Dipentylcarbonat, Dihexylcarbonat, Dicyclohexylcarbonat, Diheptylcarbonat, Dioctylcarbonat, Didecylcarbonat, Didodecylcarbonat, Ethylencarbonat, 1,2- und 1,3-Propylencarbonat, Diphenylcarbonat, Ditolylcarbonat, Dixylylcarbonat, Dinaphthylcarbonat, Ethylphenylcarbonat und Dibenzylcarbonat.

Beispiele für Carbonate, bei denen n größer als 1 ist, sind Dialkyldicarbonate, wie Di(tert.-butyl)dicarbonat, und Dialkyltricarbonate, wie Di(tert.-butyl)tricarbonat.

Bevorzugt sind aliphatische Carbonate, insbesondere Dimethylcarbonat, Diethylcarbonat, Di-n-propylcarbonat, Di-n-butylcarbonat und Diisobutylcarbonat. Bevorzugtes aromatisches Carbonat ist Diphenylcarbonat.

Die organischen Carbonate werden mit einem aliphatischen, cycloaliphatischen, aliphatisch/aromatischen oder aromatischen Alkohol (B), der mindestens 3 OH-Gruppen aufweist, oder mit Gemischen zweier oder mehrerer verschiedener Alkohole (B) umgesetzt.

Der Alkohol (B) kann verzweigt oder unverzweigt, substituiert oder unsubstituiert sein und weist vorzugsweise 3 bis 26 C-Atome auf. Bevorzugt handelt es sich um einen (cyclo)aliphatischen, besonders bevorzugt um einen aliphatischen Alkohol.

Beispiele für geeignete Alkohole (B) sind: Glycerin, Trimethylolmethan, Trimethylolethan, Trimethylolpropan, Trimethylolbutan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(trimethylolpropan), Tris(hydroxymethyl)isocyanurat, Tris(hydroxyethyl)isocyanurat, Phloroglucin, Pyrogallol, Hydroxyhydrochinon, Trihydroxytoluol, Trihydroxydimethylbenzol, Hexähydroxybenzol, 1,3,5-Benzoltrimethanol, 1,1,1-Tris(4'-hydroxyphenyl)methan, 1,1,1-Tris(4'-hydroxyphenyl)ethan, Zucker, wie Glucose, Zuckerderivate, wie Sorbit, Mannit, Threit, Erythrit, Adonit (Ribit), Arabit (Lyxit), Xylit, Dulcit (Galactit), Maltit und Isomalt, und Polyesterole.

Eine weiterhin besonders interessante Gruppe geeigneter Alkohole (B) sind ihre Alkoxylierungsprodukte. Die tri- und höherfunktionellen Polyetherole basieren dabei insbesondere auf den Umsetzungsprodukten mit Ethylenoxid, Propylenoxid oder Butylenoxid oder deren Mischungen, wobei Ethylenoxid und/oder Propylenoxid bevorzugt sind. In der Regel werden dabei 1 bis 30, bevorzugt 1 bis 20, besonders bevorzugt 1 bis 10 und ganz besonders bevorzugt 1 bis 5 mol Alkylenoxid pro mol OH-Gruppe des Alkohols eingesetzt.

Beispiele für besonders bevorzugte Alkohole (B) sind Glycerin, Trimethylolethan, Trimethylolpropan, 1,2,4-Butantriol, Pentaerythrit und deren Umsetzungsprodukte mit Ethylenoxid und/oder Propylenoxid, wobie die Umsetzungsprodukte mit Ethylenoxid und/oder Propylenoxid ganz besonders bevorzugt sind.

Die mindestens trifunktionellen Alkohole (B) können auch in Mischung mit difunktionellen Alkoholen (B') eingesetzt werden, wobei die Mischung so zu wählen ist, daß ihre mittlere OH-Funktionalität größer als 2 ist.

Beispiele für geeignete Alkohole (B') sind: Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, 1,2- und 1,3-Cyclopentandiol, 1,2-, 1,3- und 1,4-Cyclohexandiol, 1,1-, 1,2-, 1,3- und 1,4-Cyclohexandimethanol, Bis(4-hydroxycyclohexyl)methan, Bis(4-hydroxycyclohexyl)ethan, 2,2- Bis(4-hydroxycyclohexyl)propan, 1,1'-Bis(4-hydroxyphenyl)-3,3-5-trimethylcyclohexan, Resorcin, Hydrochinon, 4,4'-Dihydroxydiphenyl, Bis-(4-hydroxyphenyl)sulfid, Bis(4-hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)-propan, 1,1-Bis(p-hydroxyphenyl)cyclohexan, Dihydroxybenzophenon, difunktionelle Polyetherpolyole auf Basis der Alkoxylierungsprodukte der difunktionellen Alkohole, Polytetrahydrofurane mit einem mittleren Molekulargewicht von 162 bis 2 000, Polycaprolactone und Polyesterole auf Basis von Diolen und Dicarbonsäuren.

Die difunktionellen Alkohole (B') können zur Feineinstellung der Eigenschaften des Polycarbonats verwendet werden. Falls difunktionelle Alkohole (B') eingesetzt werden, so liegt ihre Menge in der Regel bei 0,1 bis 39,9 mol-%, bevorzugt bei 0,1 bis 35 mol-%, besonderes bevorzugt bei 0,1 bis 25 mol-% und ganz besonders bevorzugt bei 0,1 bis 10 mol-%, jeweils bezogen auf die Gesamtmenge an Alkoholen (B) und (B').

Zur Feineinstellung der Eigenschaften des Polycarbonats können auch difunktionelle carbonylreaktive Verbindungen (A') zum Einsatz kommen. Darunter sollen solche Verbindungen verstanden werden, die zwei Carbonat- und/oder Carboxylgruppen aufweisen.

Die Carboxylgruppen können dabei in freier oder derivatisierter Form vorliegen, d.h. neben den Carbonsäuren selbst oder deren Salzen mit ein- oder zweiwertigen Kationen können auch die Carbonsäurechloride, Carbonsäureanhydride oder Carbonsäureester verwendet werden, wobei die Carbonsäureester und Carbonsäureanhydride bevorzugt und die Carbonsäureester, insbesondere die C₁-C₄-Alkylester, vor allem die Methyl-, Ethyl- und Butylester, besonders bevorzugt sind.

Beispiele für geeignete Verbindungen (A') sind Dicarbonate oder Dicarbamoylchloride von Diolen, wie Ethylenglykol, 1,2-und 1,3-Propandiol, 1,1-Dimethylethan-1,2-diol, 2-Butyl-2-ethyl-1,3-propandiol, 2-Ethylpropan-1,3-diol, 2-Methylpropan-1,3-diol, Neopentylglykol, Hydroxypivalinsäureneopentylglykolester, 1,2-, 1,3- und 1,4-Butandiol, 1,6-Hexandiol, 1,10-Decandiol, Bis-(4-hydroxycyclohexan)isopropyliden, Tetramethylcyclobutandiol, 1,2-, 1,3- und 1,4-Cyclohexandiol, Cyclooctandiol, Norbornandiol, Pinandiol, Decalindiol, 2-Ethylhexan-1,3-diol, 2,4-Diethyloctan-1,3-diol, Hydrochinon, Bisphenol A, F, B und S, 2,2-Bis(4-hydroxycyclohexyl)propan, 1,1-, 1,2-, 1,3- und 1,4-Cyclohexandimethanol und 1,2-, 1,3- und 1,4-Cyclohexandiol.

Die Dicarbonate oder Dicarbamoylchloride (A') können z.B. hergestellt werden, indem die Diole so mit einem Überschuß der oben aufgeführten Carbonate (A) oder von Chlorkohlensäureestern umgesetzt werden, daß die erhaltenen Dicarbonate beidseitig mit Gruppen RO(CO)- substituiert sind. Eine weitere Möglichkeit ist die Umsetzung der Diole zunächst mit Phosgen zu den entsprechenden Chlorkohlensäureestern und anschließend deren Umsetzung mit Alkoholen.

Beispiele für geeignete Dicarbonsäuren und Dicarbonsäureanhydride sind: Oxalsäure, Maleinsäure, Fumarsäure, Bernsteinsäure, Glutarsäure, Adipinsäure, Sebacinsäure, Dodecandisäure, Phthalsäure, Isophthalsäure, Terephthalsäure, Azelainsäure, Tetrahydrophthalsäure, 1,4-Cyclohexandicarbonsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid und dimere Fettsäuren und deren Isomere und Hydrierungsprodukte.

Falls difunktionelle Verbindungen (A') eingesetzt werden, so beträgt ihre Menge in der Regel 0,1 bis 40 mol-%, bevorzugt 0,1 bis 35 mol-%, besonders bevorzugt 0,1 bis 25 mol-% und ganz besonders bevorzugt 0,1 bis 10 mol-%, jeweils bezogen auf die Gesamtmenge an Carbonate (A) oder Phosgenen und Verbindungen (A').

Die Herstellung der Kondensationsprodukte (K) in Schritt a) erfolgt bei der Umsetzung des organischen Carbonats (A) mit dem Alkohol (B) oder dem Alkoholgemisch ((B) + (B')) unter Eliminierung eines monofunktionellen Alkohols aus dem Carbonatmolekül (Variante a1)) und-bei der entsprechenden Umsetzung von Phosgen, Diphosgen oder Triphosgen unter Eliminierung von Chlorwasserstoff (Variante a2)).

Hierbei ist es notwendig, das Mengenverhältnis der Alkohole (B) (und gegebenenfalls (B')) zu den Carbonaten (A) oder den Phosgenen so einzustellen, daß die Kondensationsprodukte (K) im Mittel entweder eine Carbonat- oder Carbamoylchloridgruppe und mehr als eine OH-Gruppe, vorzugsweise mindestens zwei OH-Gruppen, oder eine OH-Gruppe und mehr als eine Carbonat- oder Carbamoylchloridgruppe, vorzugsweise mindestens zwei Carbonat- oder Carbamoylchloridgruppen, aufweisen.

Die Reaktionstemperatur sollte ausreichend für die Umsetzung der Alkoholkomponente mit der entsprechenden Carbonylkomponente sein. Bei Einsatz eines Carbonats (A) beträgt die Temperatur in der Regel 60 bis 180°C, bevorzugt 80 bis 160°C, besonders bevorzugt 100 bis 160°C und ganz besonders bevorzugt 120 bis 140°C. Bei der Umsetzung mit einem Phosgen liegt die Temperatur im allgemeinen bei -20°C bis 120°C, bevorzugt bei 0 bis 100°C und besonders bevorzugt bei 20 bis 80°C.

Die Kondensation kann in Gegenwart eines Lösungsmittels durchführt werden. Als Lösungsmittel eignen sich organische Lösungsmittel, z.B. aromatische und (cyclo)-aliphatische Kohlenwasserstoffe, halogenierte Kohlenwasserstoffe, Ketone, Ester, Amide, Ether und cyclische Carbonate, wie Decan, Dodecan, Benzol, Toluol, Xylol, Solventnaphtha, Chlorbenzol, Dimethylformamid und Dimethylacetamid.

Vorzugsweise wird jedoch kein Lösungsmittel zugesetzt.

Die Reihenfolge der Zugabe der einzelnen Komponenten spielt zumeist nur eine untergeordnete Rolle. In der Regel ist es sinnvoll, die Überschußkomponente vorzulegen und die Unterschußkomponente zuzugeben. Es ist jedoch auch möglich, die beiden Komponenten vor Reaktionsbeginn miteinander zu vermischen und das Gemisch anschließend auf die erforderliche Reaktionstemperatur zu erhitzen.

In Schritt a) können mehrere verschiedene Kondensationsprodukte (K) erzeugt werden. Dies kann durch Einsatz verschiedener Alkohole und/oder verschiedener Carbonate bzw. Phosgene erreicht werden. Auch durch die Wahl des Verhältnisses der eingesetzten Alkohole und der Carbonate bzw. Phosgene können Mischungen verschiedener Kondensationsprodukte erhalten werden.

Die Kondensationsprodukte (K) sind mit Hydroxylgruppen und mit Carbonat- bzw. Carbamoylchloridgruppen terminiert und bilden in Schritt b) durch intermolekulare Umsetzung (Polykondensation) die erfindungsgemäßen hochfunktionellen, hoch- oder hyperverzweigten Polycarbonate.

Unter "hochfunktionell" soll dabei verstanden werden, daß die Polycarbonate neben den das Polymergerüst bildenden Carbonat- bzw. Carbamoylgruppen end- oder seitenständig mindestens drei, bevorzugt mindestens sechs, besonders bevorzugt mindestens zehn funktionelle Gruppen aufweisen. Bei den funktionellen Gruppen handelt es sich um Carbonat- bzw. Carbamoylchloridgruppen und/oder OH-Gruppen. Die Anzahl der end- oder seitenständigen funktionellen Gruppen ist prinzipiell nach oben nicht beschränkt, jedoch können Polymere mit sehr hoher Anzahl funktioneller Gruppen unerwünschte Eigenschaften, z.B. hohe Viskosität oder schlechte Löslichkeit, zeigen. Die erfindungsgemäß zu verwendenden hochfunktionellen Polycarbonate weisen daher in der Regel höchstens 500, bevorzugt höchstens 100 end- oder seitenständige funktionelle Gruppen auf.

Die intermolekulare Kondensation in Schritt b) schließt sich in der Regel direkt an die Kondensationsreaktion in Schritt a) an. Gewünschtenfalls kann die Reaktionstemperatur leicht erhöht werden, so daß etwa 60 bis 250°C, bevorzugt 80 bis 230°C und besonders bevorzugt 100 bis 200°C vorliegen.

Zur Beschleunigung insbesondere der Polykondensation kann der freiwerdende monofunktionelle Alkohol ROH aus dem Reaktionsgleichgewicht entfernt werden. Dies kann insbesondere bei Alkoholen mit einem Siedepunkt ≤ 140°C durch Destillation, gegebenenfalls bei vermindertem Druck, oder sonst auch durch Durchleiten eines unter den Reaktionsbedingungen im wesentlichen inerten Gasstroms, z.B. von Stickstoff, Wasserdampf, Kohlenstoffdioxid oder eines sauerstoffhaltigen Gases, wie Luft oder Magerluft, (Strippen) geschehen.

Weiterhin können zur Beschleunigung der Reaktion auch Katalysatoren oder Katalysatorgemische zugegeben werden. Diese können direkt mit den Edukten in Schritt a) vorgelegt oder später zugesetzt werden.

Als Katalysator geeignet sind vor allem Verbindungen, die Veresterungs- oder Umesterungsreaktionen katalysieren, z.B. anorganische und organische Basen, wie Alkalimetallhydroxide, -carbonate und -hydrogencarbonate, vorzugsweise die Natrium-, Kalium- und Cäsiumverbindungen, tertiäre Amine und Guanidine, Ammoniumverbindungen, Phosphoniumverbindungen, metallorganische Verbindungen, wie Aluminium-, Zinn-, Zink-, Titan-, Zirkon- und Bismut-organische Verbindungen, und Doppelmetallcyanide (DMC) sowie deren Gemische.

Bevorzugte Katalysatoren sind Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol und 1-Methyl- und 1,2-Dimethylimidazol, Titantetrabutylat, Titantetraisopropylat, Dibutylzinnoxid, Dibutylzinndilaurat, Zinndioctoat und Zirkonacetylacetonat.

Geeignete Katalysatormengen liegen im allgemeinen bei 50 bis 10 000 ppm, bevorzugt bei 100 bis 5 000 ppm, bezogen auf die Menge des eingesetzten Alkohols oder Alkoholgemischs.

Die intermolekulare Polykondensation kann sowohl durch Zugabe des geeigneten Katalysators als auch durch Wahl der geeigneten Reaktionstemperatur gesteuert werden. Weiterhin läßt sich das mittlere Molekulargewicht der Polycarbonate über die Zusammensetzung der Edukte und über die Reaktionszeit regulieren.

Erfolgt die Polykondensation bei erhöhter Temperatur, so werden Polycarbonate erhalten, die bei Raumtemperatur üblicherweise über einen längeren Zeitraum, z.B. über mindestens 6 Wochen, stabil sind, ohne Trübungen, Ausfällungen und/oder einen Viskositätsanstieg zu zeigen.

Die Herstellung kann bei Normaldruck oder unter vermindertem oder erhöhtem Druck in Reaktoren oder Reaktorkaskaden, die im Batchbetrieb, halbkontinuierlich oder kontinuierlich betrieben werden, vorgenommen werden.

Zum Abbruch der intermolekularen Polykondensationsreaktion gibt es verschiedene Möglichkeiten.

Beispielsweise kann man die Temperatur auf einen Wert senken, bei dem die Reaktion zum Stillstand kommt und das Polykondensationsprodukt lagerstabil ist. Dies ist in der Regel bei Temperaturen ≤ 60°C, bevorzugt ≤ 50°C, besonders bevorzugt ≤ 40°C und ganz besonders bevorzugt bei Raumtemperatur der Fall.

Weiterhin kann man den Katalysator desaktivieren. Bei basischen Katalysatoren kann dies in einfacher Weise durch Zugabe einer sauren Komponente, z.B. einer LewisSäure oder einer organischen oder anorganischen Protonensäure, wie Phosphorsäure, geschehen.

Außerdem kann man die Reaktion durch Verdünnen mit einem vorgekühlten Lösungsmittel stoppen. Dies ist insbesondere dann bevorzugt, wenn die Viskosität des Reaktionsgemischs durch Zugabe von Lösungsmittel angepaßt werden muß.

Schließlich kann man die Polykondensation auch durch Zusatz einer Komponente mit funktionellen Gruppen, die gegenüber der fokalen Gruppe der Kondensationsprodukte (K) reaktiv sind, abbrechen. So kann man bei einer Carbonat- bzw. Carbamoylgruppe als fokaler Gruppe z.B ein Mono-, Di- oder Polyamin und bei einer OH-Gruppe als fokaler Gruppe ein Mono-, Di- oder Polyisocyanat, eine Epoxidgruppen enthaltende Verbindung oder ein mit OH-Gruppen reaktives Säurederivat zugeben.

Durch die Wahl geeigneter Reaktionsbedingungen können die erhaltenen Polycarbonate nach der Herstellung in der Regel ohne weitere Reinigung für die gewünschte Anwendung eingesetzt werden.

Falls jedoch erforderlich, kann das erhaltene Reaktionsgemisch einer Entfärbung, beispielsweise durch Behandlung mit Aktivkohle oder Metalloxiden, wie Aluminiumoxid, Siliciumoxid, Magnesiumoxid, Zirkonoxid, Boroxid oder Gemischen davon, in Mengen von beispielsweise 0,1 bis 50 Gew.-%, bevorzugt 0,5 bis 25 Gew.-%, besonders bevorzugt 1 bis 10 Gew.-%, bei Temperaturen von beispielsweise 10 bis 100°C, bevorzugt 20 bis 80°C und besonders bevorzugt 30 bis 60°C, unterworfen werden.

Gegebenenfalls kann das Reaktionsgemisch auch zur Entfernung von eventuell vorhandenen Ausfällungen filtriert werden.

Das Polykondensationsprodukt kann gewünschtenfalls auch gestrippt, d.h., von niedermolekularen, flüchtigen Verbindungen befreit, werden. Dazu kann nach Erreichen des gewünschten Polykondensationsgrades der Katalysator optional desaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

Die erfindungsgemäß zu verwendenden Polycarbonate sind verzweigt, aber unvernetzt.

"Unvernetzt" soll dabei bedeuten, daß ein Vernetzungsgrad von ≤ 15 Gew.-%, bevorzugt von ≤ 10 Gew.-%, bestimmt über den unlöslichen Anteil des Polymeren, vorliegt.

Der unlösliche Anteil des Polymeren wurde durch vierstündige Extraktion mit dem bei der Gelpermeationschromatographie verwendeten Lösungsmittel (Tetrahydrofuran, Dimethylacetamid oder Hexafluorisopropanol) in einer Soxhlet-Apparatur und Wägung des verbliebenen, bis zur Gewichtskonstanz getrockneten Rückstands bestimmt.

Die erfindungsgemäß zu verwendenden Polycarbonate weisen im Idealfall im Mittel entweder eine Carbonat- oder Carbamoylchloridgruppe als fokale Gruppe und mehr als zwei OH-Gruppen oder aber eine OH-Gruppe als fokale Gruppe und mehr als zwei Carbonat- oder Carbamoylchloridgruppen auf. Die Anzahl der reaktiven Gruppen ergibt sich dabei aus der Beschaffenheit der Kondensationsprodukte (K) und dem Polykondensationsgrad.

Die erfindungsgemäß zu verwendenden Polycarbonate können neben den bereits enthaltenen Hydroxyl-, Carbonat- und Carbamoylchloridgruppen weitere funktionelle Gruppen enthalten, wenn Komponenten an der Polykondensationsreaktion beteiligt wurden, die neben Hydroxyl-, Carbonat- oder Carbamoylgruppen weitere funktionelle Gruppen oder funktionelle Elemente aufweisen.

Zusätzliche funktionelle Gruppen oder funktionelle Elemente können dabei z.B. Carbamatgruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste sein.

Im folgenden sind Beispiele für die Komponenten aufgelistet, durch deren Einbau eine Funktionalisierung mit diesen Gruppen bewirkt wird:
- Carbamatgruppen: z.B. Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol, höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin und Isophorondiamin, Alkyl- und Arylisocyanate, Alkyl- und Aryldiisocyanate;
- Mercaptogruppen: z.B. Mercaptoethanol;
- tertiäre Aminogruppen: z.B. Triethanolamin, Tripropanolamin, N-Methyldiethanolamin, N-Methyldipropanolamin und N,N-Dimethylethanolamin;
- Ethergruppen: z.B. di- und höherfunktionelle Polyetherole;
- Estergruppen: z.B. Dicarbonsäuren, Tricarbonsäuren, Dicarbonsäureester, wie Terephthalsäuredimethylester, und Tricarbonsäureester;
- langkettige Alkylreste: z.B. langkettige Alkanole und Alkandiole, Alkylisocyanate und Alkyldiisocyanate;
- Urethan- und Harnstoffgruppen: z.B. primäre und sekundäre Amine.

Die in den Polycarbonaten enthaltenen Hydroxyl-, Carbonat- und Carbamoylgruppen können auch durch nachträgliche bereits enthaltenen Gruppen umfunktionalisiert worden sein.

So können z.B. Hydroxylgruppen in folgende Gruppen überführt werden: Durch Zugabe von Säuregruppen- oder Isocyanatgruppen enthaltenden Molekülen sind Ester- oder Urethangruppen zu erhalten. Säuregruppen können durch Umsetzung mit Anhydridgruppen gebildet werden. Schließlich können die Polycarbonate durch Umsetzung mit Alkylenoxiden, insbesondere Ethylenoxid, Propylenoxid oder Butylenoxid, auch in hochfunktionelle Polycarbonat-Polyetherpolyole überführt werden.

Das mittlere Molekulargewicht M_{w} der erfindungsgemäß zu verwendenden Polycarbonate liegt in der Regel bei 500 bis 500 000, bevorzugt bei 1 000 bis 150 000, besonders bevorzugt bei 1 000 bis 50 000 und ganz besonders bevorzugt bei 1 500 bis 25 000.

Die Polydispersität M_{w}/Mₙ der erfindungsgemäß zu verwendenden Polycarbonate beträgt in der Regel 1,1 bis 50, bevorzugt 1,2 bis 40 und besonders bevorzugt 1,2 bis 35.

Die erfindungsgemäß zu verwendenden Polycarbonate sind hervorragende Dispergiermittel für Pigmente. Sie erleichtern die Dispergierung der Pigmente in den Anwendungsmedien und führen zu einer Gesamtverbesserung ihrer anwendungstechnischen Eigenschaften, insbesondere ihrer koloristischen Eigenschaften, z.B. Farbstärke und Transparenz, und ihrer rheologischen Eigenschaften, z.B. geringere Viskosität und Flockungsstabilität in flüssigen Anwendungsmedien.

Die erfindungsgemäß zu verwendenden Polycarbonate können dem jeweiligen Anwendungsmedium separat von den Pigmenten, bevorzugt vorher oder gleichzeitig, zugegeben werden. Besonders bevorzugt werden sie jedoch vorab mit den Pigmenten zu flüssigen oder vorzugsweise festen Pigmentzubereitungen verarbeitet.

Gegenstand der Erfindung sind daher auch Pigmentzubereitungen, die
(I) mindestens ein Pigment
   und
(II) mindestens ein erfindungsgemäßes Polycarbonat als Dispergiermittel enthalten.

Vorzugsweise enthalten die erfindungsgemäßen Pigmentzubereitungen 1 bis 50 Gew.-% des Polycarbonats (II), bezogen auf das Gewicht der Zubereitung.

Die Pigmentzubereitungen können als zusätzliche Bestandteile weitere übliche Hilfsmittel, z.B. oberflächenaktive Additive, insbesondere solche auf Basis von Pigmentderivaten (sog. Pigmentsynergisten), enthalten.

Daneben kommen insbesondere für flüssige erfindungsgemäße Pigmentzubereitungen noch weitere Hilfsmittel, wie Bindemittel, Vernetzer, Retentionsmittel, Verdicker, Biozide und/oder zusätzliche Dispergiermittel, in Betracht.

Kommen zusätzliche Hilfsmittel in den erfindungsgemäßen Pigmentzubereitungen zum Einsatz, so beträgt ihr Anteil im allgemeinen bis zu 10 Gew.-%.

Flüssige erfindungsgemäße Pigmentzubereitungen sind vorzugsweise wasserbasierend, d.h., sie enthalten Wasser oder Mischungen von Wasser und organischen Lösungsmitteln, z.B. Alkoholen, vor allem solchen mit wasserrückhaltender Wirkung, als flüssige Phase. Die flüssige Phase macht in diesen Pigmentzubereitungen üblicherweise 50 bis 90 Gew.-% aus.

Bevorzugt handelt es sich bei den erfindungsgemäßen Pigmentzubereitungen um feste Zubereitungen.

Der Gehalt der festen Pigmentzubereitungen an dem erfindungsgemäßen Dispergiermittel Polycarbonat (II) kann niedriger oder höher sein.

Geeignete Zusammensetzungen für Pigmentzubereitungen mit einem niedrigeren Gehalt an Polycarbonat (II) (auch als "oberflächenmodifizierte Pigmente" bezeichnet) liegen in der Regel bei 80 bis 99 Gew.-%, insbesondere 90bis 98 Gew.-%, des Pigments (I) und 1 bis 20 Gew.-%, vor allem 2 bis 10 Gew.-%, des Polycarbonats (III).

Die mit den Polycarbonaten (II) oberflächenmodifizierten Pigmente weisen alle oben genannten positiven Anwendungseigenschaften, also z.B. Dispergierweichheit, hohe Farbstärke, hohe Transparenz und Flockungsstabilität, auf und können vorteilhaft zur Einfärbung von organischen und anorganischen Materialien jeglicher Art eingesetzt werden.

Flüssige Anwendungsmedien können dabei rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren. Bevorzugt sind dabei wasserbasierende Anwendungsmedien.

Als Beispiele für Materialien, die mit den erfindungsgemäßen Pigmentzubereitungen eingefärbt werden können, seien genannt:
- Lacke, z.B. Bautenlacke, Industrielacke, Fahrzeuglacke, strahlungshärtbare Lacke;
- Anstrichmittel, sowohl für den Bautenaußen- als auch -innenbereich, z.B. Holzanstrichmittel, Kalkfarben, Leimfarben, Dispersionsfarben;
- Druckfarben, z.B. Offsetdruckfarben, Flexodruckfarben, Toluoltiefdruckfarben, Textildruckfarben, strahlungshärtbare Druckfarben;
- Tinten, auch Ink-Jet-Tinten;
- Colorfilter;
- Baustoffe, z.B. Silikatputzsysteme, Zement, Beton, Mörtel, Gips;
- Asphalt;
- cellulosehaltige Materialien, z.B. Papier, Pappe, Karton, Holz und Holzwerkstoffe, die lackiert oder anderweitig beschichtet sein können;
- Klebstoffe und Dichtungsmassen;
- filmbildende polymere Schutzkolloide, wie sie beispielsweise in der Pharmaindustrie verwendet werden;
- kosmetische Artikel;
- Detergentien;
- Kunststoffe,
   sowohl abgewandelte Naturstoffe, wie Duroplaste, z.B. Casein-Kunststoffe; Thermoplaste, z.B. Cellulosenitrat, Celluloseacetat, Cellulosemischester und Celluloseether,
   als auch synthetische Kunststoffe, wie:
   Polykondensate: Duroplaste, z.B. Phenolharz, Harnstoffharz, Thioharnstoffharz, Melaminharz, ungesättigtes Polyesterharz, Allylharz, Silicon, Polyimid und Polybenzimidazol; Thermoplaste, z.B. Polyamid, Polycarbonat, Polyester, Polyphenylenoxid, Polysulfon und Polyvinylacetal;
   Polymerisate: Thermoplaste, z.B. Polyolefine, wie Polyethylen, Polypropylen, Poly-1-buten und Poly-4-methyl-1-penten, lonomere, Polyvinylchlorid, Polyvinylidenchlorid, Polymethylmethacrylat, Polyacrylnitril, Polystyrol, Polyacetal, Fluorkunststoffe, Polyvinylalkohol, Polyvinylacetat und Poly-p-xylylen sowie Copolymere, wie Ethylen/Vinylacetat-Copolymere, Styrol/Acrylnitril-Copolymere, Acrylnitril/Butadien/Styrol-Copolymere, Polyethylenglykolterephthalat und Polybutylenglykolterephthalat;
   Polyaddukte: Duroplaste, z.B. Epoxidharz und vernetzte Polyurethane; Thermoplaste, z.B. lineare Polyurethane und chlorierte Polyether.

Erfindungsgemäße feste Pigmentzubereitungen mit höherem Gehalt an dispergierendem Polycarbonat (II) enthalten üblicherweise 50 bis 95 Gew.-%, bevorzugt 70 bis 85 Gew.-%, des Pigments (I) und 5 bis 50 Gew.-%, vorzugsweise 15 bis 30 Gew.-%, des Polycarbonats (II).

Erfindungsgemäße Pigmentzubereitungen in diesem Zusammensetzungsbereich weisen zusätzlich neben den oben für die oberflächenmodifizierten Pigmente genannten vorteilhaften Anwendungseigenschaften eine besonders ausgeprägte Verträglichkeit sowohl mit wäßrigen als auch mit nichtwäßrigen flüssigen Anwendungsmedien sowie insbesondere auch Stir-in-Verhalten auf, d.h., sie können mit sehr geringem Energieeintrag in den Anwendungsmedien verteilt werden.

Bei flüssigen Anwendungsmedien kann dies durch einfaches Einrühren oder Schütteln geschehen, bei Kunststoffen z.B. durch gemeinsames Extrudieren (vorzugsweise mit einem Ein- oder Zweischneckenextruder), Walzen, Kneten oder Mahlen, wobei die Kunststoffe als plastische Massen oder Schmelzen vorliegen und zu Kunststofformkörpern, Folien und Fasern verarbeitet werden können.

Die erfindungsgemäßen Polycarbonate eignen sich zur Dispergierung organischer und anorganischer Pigmente. Dementsprechend können die erfindungsgemäßen Pigmentzubereitungen organische oder anorganische Pigmente als Komponente (I) enthalten.

Selbstverständlich können wie bei der Dispergiermittelkomponente (II) auch Pigmentmischungen enthalten sein, also Mischungen von verschiedenen organischen oder verschiedenen anorganischen Pigmenten oder Mischungen von (mehreren) organischen und (mehreren) anorganischen Pigmenten.

Die Pigmente liegen in feinteiliger Form in den Pigmentzubereitungen vor und haben dementsprechend üblicherweise mittlere Teilchengrößen von 0,02 bis 5 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente und die üblicherweise als Füllstoffe eingesetzten anorganischen Pigmente sein.

Im folgenden seien als Beispiele für geeignete organische Farbpigmente genannt:
- Monoazopigmente: C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168,181, 183 und 191;
   C.I. Pigment Violet 32;
- Disazopigmente: C.I. Pigment Orange 16, 34, 44 und 72;
   C.I. Pigment Yellow 12, 13, 14, 16, 17, 81, 83, 106, 113, 126, 127, 155, 174, 176, 180 und 188;
- Disazokondensationspigmente: C.I. Pigment Yellow 93, 95 und 128;
   C.I. Pigment Red 144, 166, 214, 220, 221, 242 und 262;
   C.I. Pigment Brown 23 und 41;
- Anthanthronpigmente: C.I. Pigment Red 168;
- Anthrachinonpigmente: C.I. Pigment Yellow 147, 177 und 199;
   C.I. Pigment Violet 31;
- Anthrapyrimidinpigmente: C.I. Pigment Yellow 108;
- Chinacridonpigmente: C.I. Pigment Orange 48 und 49;
   C.I. Pigment Red 122, 202, 206 und 209;
   C.I. Pigment Violet 19;
- Chinophthalonpigmente: C.I. Pigment Yellow 138;
- Diketopyrrolopyrrolpigmente: C.I. Pigment Orange 71, 73 und 81;
   C.I. Pigment Red 254, 255, 264, 270 und 272;
- Dioxazinpigmente: C.I. Pigment Violet 23 und 37;
   C.I. Pigment Blue 80;
- Flavanthronpigmente: C.I. Pigment Yellow 24;
- Indanthronpigmente: C.1. Pigment Blue 60 und 64;
- Isoindolinpigmente: C.I. Pigmente Orange 61 und 69;
   C.I. Pigment Red 260;
   C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257;
   C.I. Pigment Yellow 117, 129, 150, 153 und 177;
   C.I. Pigment Green 8;
- Perinonpigmente: C.I. Pigment Orange 43;
   C.I. Pigment Red 194;
- Perylenpigmente: C.I. Pigment Black 31 und 32;
   C.I. Pigment Red 123, 149, 178, 179, 190 und 224;
   C.I. Pigment Violet 29;
- Phthälocyaninpigmente: C.I. Pigment Blue 15, 15:1, 15:2,15:3, 15:4, 15:6 und 16;
   C.I. Pigment Green 7 und 36;
- Pyranthronpigmente: C.I. Pigment Orange 51;
   C.I. Pigment Red 216;
- Pyrazolochinazolonpigmente: C.I. Pigment Orange 67;
   C.I. Pigment Red 251;
- Thioindigopigmente: C.I. Pigment Red 88 und 181;
   C.I. Pigment Violet 38;
- Triarylcarboniumpigmente: C.I. Pigment Blue 1, 61 und 62;
   C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36; C.I. Pigment Blue 72); Ultramarinblau; Manganblau;
   Ultramarinviolett; Kobalt- und Manganviolett;
   Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
   Eisenoxidbraun (C.1. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
   Cersulfid (C.I. Pigment Orange 75);
   Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Glanzpigmente sind insbesondere einphasig oder mehrphasig aufgebaute plättchenförmige Pigmente, deren Farbenspiel durch das Zusammenspiel von Interferenz-, Reflexions- und Absorptionsphänomenen geprägt ist. AIs Beispiele seien Aluminiumplättchen und ein- oder mehrfach, insbesondere mit Metalloxiden beschichtete Aluminium-, Eisenoxid- und Glimmerplättchen genannt.

Beispiele für bevorzugte Pigmente (I) sind Phthalocyaninpigmente, Indanthronpigmente und Perylenpigmente.

Die erfindungsgemäßen festen Pigmentzubereitungen können vorteilhaft nach dem ebenfalls erfindungsgemäßen Herstellungsverfahren hergestellt werden, indem man das Pigment (I) und das Dispergiermittel (II) gemeinsam einer Zerkleinerung in Gegenwart eines flüssigen Mediums oder in trockenem Zustand unterwirft und gegebenenfalls das flüssige Medium anschließend entfernt.

Bei dem Zerkleinerungsprozeß handelt es sich vorzugsweise um eine Mahlung in flüssigem Medium oder in trockenem Zustand.

Die Trockenmahlung kann z.B in Kugelmühlen, Schwingmühlen, Planetenmühlen oder Attritoren erfolgen. Beispiele für geeignete Mahlkörper sind Stahlkugeln, Silicium/Aluminium/Zirkonoxidperlen (SAZ-Perlen), Glasperlen und Achatkugeln, die üblicherweise einen Durchmesser im Bereich von 0,1 bis 10 cm, vorzugsweise 2 bis 5 cm, aufweisen.

Bevorzugte Verfahrensvariante ist die Naßmahlung insbesondere in wäßriger, zumindest einen Teil des Dispergiermittels (II) enthaltender Suspension.

Hierfür sind Rührwerkskugelmühlen als Mahlaggregat besonders geeignet. Bevorzugte Mahlkörper sind SAZ-Perlen, deren Durchmesser insbesondere 0,4 bis 3 mm beträgt.

Als flüssiges Medium wird vorzugsweise Wasser eingesetzt, es können jedoch auch Mischungen von Wasser mit insbesondere wasserlöslichen oder mit Wasser mischbaren organischen Lösungsmitteln, z.B. Alkoholen, verwendet werden.

Das Pigment (I) kann beim erfindungsgemäßen Verfahren als trockenes Pulver oder in Form eines Preßkuchens eingesetzt werden.

Bei dem eingesetzten Pigment (I) handelt es sich vorzugsweise um ein gefinishtes Produkt, d.h., die Primärkorngröße des Pigments ist bereits auf den für die Anwendung gewünschten Wert eingestellt. Es können jedoch auch ungefinishte Pigmente eingesetzt werden. Bei anorganischen Pigmenten, z.B. bei Oxid- und Bismutvanadatpigmenten, erfolgt die Einstellung der Primärkorngröße üblicherweise bei der Pigmentsynthese, so daß die anfallenden Pigmentsuspensionen direkt beim erfindungsgemäßen Verfahren eingesetzt werden können.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann auch die Sekundär-Teilchengröße der erfindungsgemäßen Pigmentzubereitungen gezielt gesteuert werden.

Bei Sprüh- und Wirbelschichtgranulierung können grobteilige Granulate mit mittleren Korngrößen von 50 bis 5 000 µm, insbesondere 100 bis 1 000 µm, erhalten werden. Durch Sprühtrocknung werden üblicherweise Granulate mit mittleren Korngrößen 50 bis 500 µm erhalten. Feinteilige Zubereitungen können bei der Trocknung im Schaufeltrockner und beim Eindampfen mit anschließender Desagglomerieungsmahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Dispergiermittel (II) sind entweder bereits flüssig oder schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im allgemeinen bei 150 bis 300°C, bevorzugt bei 160 bis 200°C. Die Gasaustrittstemperatur beträgt in der Regel 70 bis 150°C, vorzugsweise 70 bis 130°C.

Die Restfeuchte des erhaltenen Pigmentgranulats liegt bevorzugt bei < 2 Gew.-%.

### Beispiele

### A. Herstellung von erfindungsgemäßen Pigmentzubereitungen

### A.1. Herstellung der als Dispergiermittel eingesetzten Polycarbonate

Der mehrfunktionelle Alkohol A, Diethylcarbonat und Katalysator K (250 ppm, bezogen auf die Alkoholmenge) wurden in dem in Tabelle 1 angegebenen Molverhältnis in einem Dreihalskolben, ausgestattet mit Rührer, Rückflußkühler und Innenthermometer, vorgelegt. Die Mischung wurde dann auf 120°C, bei dem mit * gekennzeichneten Versuch auf 140°C erhitzt, und 2 h bei dieser Temperatur gerührt. Mit fortschreitender Reaktionsdauer reduzierte sich dabei die Temperatur des Reaktionsgemischs, bedingt durch die einsetzende Siedekühlung des freigesetzten Ethanols. Nach Ersetzen des Rückflußkühlers durch einen absteigenden Kühler und Zugabe eines Äquivalents Phosphorsäure je Äquivalent Katalysator K, wurde der freigesetzte Ethanol abdestilliert und die Temperatur des Reaktionsgemischs langsam bis auf 160°C erhöht. Der Umsatz wurde durch Auswiegen des abdestillierten Alkohols ermittelt und ist in Tabelle 1 in mol-%, bezogen auf den theoretisch möglichen Vollumsatz, angegeben.

Die mittleren Molekulargewichte MG (M_{w} und Mₙ) der erhaltenen Polycarbonate wurden anschließend durch Gelpermeationschromatographie unter Verwendung von Dimethylacetamid als Laufmittel und von Polymethylmethacrylat (PMMA) als Standard bestimmt.

Die Viskosität [mPas]der erhaltenen Polycarbonate wurde bei 23°C nach DIN 53019, Teil 1 gemessen. Ihre OH-Zahl [mg KOH/g] wurde nach DIN 53240, Teil 2 bestimmt.

Nähere Einzelheiten zu diesen Versuchen sowie deren Ergebnisse sind in Tabelle 1 zusammengestellt. Die benutzten Abkürzungen bedeuten dabei:
- TMP:: Trimethylolpropan
- DEC:: Diethylcarbonat
- PO:: Propylenoxid
- EO:: Ethylenoxid

**Tabelle 1**

| Polycarbonat | Alkohol A | Molverhältnis A : DEC | Katalysator K | Umsatz [mol-%] | MG [g/mol] M_{w} Mn | Viskosität [mPas] | Ob-Zahl [mg KOH/g] |
|---|---|---|---|---|---|---|---|
| P1 | TMP x 1,2 PO/ mol TMP | 1 : 1 | K₂CO₃ | 70 | 2100 | 7220 | 461 |
| | | | | | 1450 | | |
| P2* | TMP x 5,4 PO/ mol TMP | 1 : 1 | KOH | 70 | 7800 | 1260 | 227 |
| | | | | | 2500 | | |
| P3 | TMP x 12 EO/ mol TMP | 1 : 1 | K₂CO₃ | 90 | 5500 | 990 | 164 |
| | | | | | 2700 | | |

### A.2. Herstellung der Pigmentzubereitungen

Die Herstellung der Pigmentzubereitungen erfolgte in 2 Schritten. Zuerst wurde eine Suspension von x g Pigment (I) und y g hyperverzweigtem Polycarbonat (II) in 200 g Wasser (Beispiele 1 und 2) bzw. 88 g Wasser (Beispiel 3) suspendiert, mit Dimethylethanolamin (Beispiele 1 und 2) bzw. Ammoniak (Beispiel 3) auf einen pH-Wert von 8 eingestellt und in einer Rührwerkskugelmühle mit SAZ-Perlen vom Durchmesser 1,0 - 1,6 mm (Beispiele 1 und 2) bzw. 0,5 - 0,75 mm (Beispiel 3) auf einen d₅₀-Wert von < 1 µm gemahlen. Die nach Abtrennen der SAZ-Perlen erhaltene Dispersion wurde anschließend in einem Sprühturm mit Einstoffdüse (Gaseintrittstemperatur 160-170°C, Gasaustrittstemperatur 70-80°C) unter Granulierung sprühgetrocknet.

Die Zusammensetzung der hergestellten Pigmentzubereitungen ist in Tabelle 2 aufgeführt.

**Tabelle 2**

| Beispiel | Pigment | | Polycarbonat | |
|---|---|---|---|---|
| | x g | (I) | y g | (II) |
| 1 | 150 | C.I. Pigment Red 179 | 30 | P1 |
| 2 | 150 | C.I. Pigment Red 179 | 7,5 | P2 |
| 3 | 45 | C.I. Pigment Blue 15:3 | 11,3 | P3 |

### B. Prüfung der erhaltenen Pigmentzubereitungen

### B.1. Anwendung in einem wäßrigen Lacksystem

Zunächst wurden Wasserabtönpasten hergestellt, die jeweils 15 Gew.-% der Pigmentzubereitung aus Beispiel 1 bzw. 2 enthielten. Dazu wurde eine Mischung aus 100 g der in Beispiel 1.3 der WO-A-92/15405 beschriebenen wäßrigen Polyurethanharzdispersion, 32,4 g der Pigmentzubereitung aus Beispiel 1 bzw. 28,4 g der Pigmentzubereitung aus Beispiel 2 und der entsprechenden Menge Wasser mit Dimethylethanolamin auf einen pH-Wert von 8 eingestellt und in einer Rührwerkskugelmühle mit SAZ-Perlen vom Durchmesser 1,0 - 1,6 mm 4 h gemahlen.

Zur Herstellung des Lacks wurden dann jeweils 34 g der erhaltenen Wasserabtönpasten zu 225 g eines Mischlacks auf Polyurethanbasis (beschrieben in Beispiel 3 der WO-A-92/15405) gegeben. Nach Zugabe von 7,5 g Wasser wurde mit Aminoethanol ein pH-Wert von 8 eingestellt. Die erhaltene Suspension wurde dann 15 min mit einem Propellerrührer bei 1000 U/min gerührt.

Zum Vergleich V wurden eine Wasserabtönpaste und ein wäßriger Lack auf Basis des in Beispiel 1 und 2 eingesetzten gefinishten, jedoch nicht oberflächenmodifizierten Pigments (Einsatz von 27 g C.I. Pigment Red 179) analog hergestellt.

Die Überprüfung der Viskosität erfolgte durch Messung der Fließzeit der Wasserabtönpasten mit einem Fließblech (Stufe 5).

Das Fließblech ist mit einer Vertiefung versehen. Der Mittelpunkt dieser Vertiefung ist die Stufe 1. Im Abstand von jeweils 40 mm wurden am Rand des Bleches Markierungen angebracht, die den Stufen 2 bis 5 entsprechen.

Dann wurden jeweils 3 g der erhaltenen Abtönpaste in die Vertiefung des waagerecht liegenden Bleches eingewogen. Nach fünfminütiger waagerechter Lagerung wurde das Blech senkrecht aufgehängt, so daß die Abtönpaste nach unten fließen konnte.

Das Fließverhalten wurde durch Messen der Fließzeit von Stufe 2 zu Stufe 5 beurteilt. Je kürzer die Fließzeit ist, desto geringer ist die Viskosität der Abtönpaste.

Die Bestimmung der Farbstärke erfolgte in der Weißaufhellung. Dazu wurden 1,6 g des jeweils erhaltenen Lackes mit 1,0 g einer 40 gew.-%ig mit Titandioxid (Kronos 2310) pigmentierten Weißpaste (Weißaufhellung ca. 1/3 Standardfarbtiefe) gemischt, als 150 µm dicke Schicht auf ein Blech aufgetragen, abgelüftet und 30 min bei 130°C eingebrannt.

Der Ausfärbung mit dem Vergleichspigment V wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

Zur Bestimmung der Transparenz (Lasur) wurde der oben beschriebene Lack in einer Schichtdicke von 200 µm über einen Schwarz-Weiß-Karton abgerakelt und nach der Trocknung das Streu-Delta-E (ddE) über Schwarz gegenüber der Vergleichsprobe mit dem Pigment V bestimmt. Negative Werte bedeuten eine höhere Transparenz.

Die erhaltenen Ergebnisse sind in Tabelle 3 zusammengestellt.

**Tabelle 3**

| Pigmentzubereitung | Fließzeit [s] | FAE | Lasur (ddE) |
|---|---|---|---|
| 1 | 25 | 94 | - 2,2 |
| 2 | 41 | 91 | - 1,5 |
| V | 88 | 100 | - |

### B.2. Anwendung in einem lösungsmittelbasierenden Einbrennlack

Die Beurteilung der Färbstärke der Pigmentzubereitung aus Beispiel 3 erfolgte an einem mit dieser Zubereitung eingefärbten Alkyd-Melamin-Einbrennlack in der Weißaufhellung.

Dazu wurde eine Mischung von 0,2 g der Pigmentzubereitung (entspricht 0,16 g Pigment), 10 g Titandioxid (Kronos 2310) und 10 g Alkyd-Melamin-Einbrennlack (Feststoffgehalt ca. 55 Gew.-%) 30 min mit 15 g Glasperlen (2 mm Durchmesser) in einer Skandex-Schüttelmaschine geschüttelt, dann mit einer 100 µm-Spiralrakel auf Karton aufgetragen und nach 10minütigem Ablüften 30 min bei 120°C eingebrannt.

Der Vergleich mit einem Lack, der mit 0,16 g des in Beispiel 3 eingesetzten gefinishten, kein Polycarbonat enthaltenden C.I. Pigment Blue 15:3 pigmentiert wurde, ergab eine deutlich höhere Farbstärke im Fall der erfindungsgemäßen Pigmentzubereitung.

## Patentansprüche

1. Verwendung von hochfunktionellen, hoch- oder hyperverzweigten Polycarbonaten, erhältlich durch
a) Herstellung eines oder mehrerer verschiedener Kondensationsprodukte (K) entweder durch
a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B), der mindestens 3 OH-Gruppen aufweist, unter Eliminierung von Alkoholen ROH, wobei es sich bei R jeweils unabhängig voneinander um einen geradkettigen oder verzweigten aliphatischen, aromatisch/aliphatischen oder aromatischen Kohlenwasserstoffrest mit 1 bis 20 C-Atomen handelt und die Reste R auch unter Bildung eines die Gruppierung -O[(CO)O]ₙ- enthaltenden Ringes miteinander verbunden sein können und n eine ganze Zahl von 1 bis 5 bedeutet,
oder
a2) Umsetzung von Phosgen, Diphosgen oder Triphosgen mit dem aliphatischen, aliphatisch/aromatischen oder aromatischen Alkohol (B) unter Freisetzung von Chlorwasserstoff,
wobei das Mengenverhältnis der Alkohole (B) zu den Carbonaten (A) oder den Phosgenen im Reaktionsgemisch so gewählt wird, daß die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen,
und
b) intermolekulare Umsetzung der in Schritt a) gebildeten Kondensationsprodukte (K),
als Dispergiermittel für Pigmente.

2. Pigmentzubereitungen, enthaltend
(I) mindestens ein Pigment
und
(II) mindestens ein hochfunktionelles, hoch- oder hyperverzweigtes Polycarbonat gemäß Anspruch 1 als Dispergiermittel.

3. Pigmentzubereitungen nach Anspruch 2, die 1 bis 50 Gew.-% der Komponente (II), bezogen auf das Gewicht der Zubereitung, enthalten.

4. Pigmentzubereitungen nach Anspruch 2, die 80 bis 99 Gew.-% der Komponente (I) und 1 bis 20 Gew.-% der Komponente (II) enthalten.

5. Pigmentzubereitungen nach Anspruch 2, die 50 bis 95 Gew.-% der Komponente (I) und 5 bis 50 Gew.-% der Komponente (II) enthalten.

6. Verfahren zur Herstellung von Pigmentzubereitungen gemäß Anspruch 4 oder 5, **dadurch gekennzeichnet, daß** man das Pigment (I) und das Dispergiermittel (II) gemeinsam einer Zerkleinerung in Gegenwart eines flüssigen Mediums oder in trockenem Zustand unterwirft und gegebenenfalls das flüssige Medium anschließend entfernt.

7. Verfahren nach Anspruch 6, **dadurch gekennzeichnet, daß** man das Pigment (I) zunächst in wäßriger, zumindest einen Teil des Dispergiermittels (II) enthaltender Suspension einer Naßzerkleinerung unterwirft und die Suspension dann, gegebenenfalls nach Zugabe der restlichen Menge Dispergiermittel (II), trocknet.

8. Verwendung von Pigmentzubereitungen gemäß den Ansprüchen 2 bis 5 zur Einfärbung von flüssigen Anwendungsmedien.

9. Verwendung nach Anspruch 8, **dadurch gekennzeichnet, daß** die flüssigen Anwendungsmedien Lacke, Druckfarbe, Tinten oder Beschichtungssysteme sind, die als flüssige Phase Wasser, organische Lösungsmittel oder Mischungen von Wasser und organischen Lösungsmitteln enthalten.

10. Verwendung von Pigmentzubereitungen gemäß den Ansprüchen 2 bis 5 zur Einfärbung von Kunststoffen.

## Claims

1. The use of high functionality hyperbranched polycarbonates obtainable by
a) preparing one or more different condensation products (K) either by
a1) reacting at least one organic carbonate (A) of the general formula RO[(CO)O]ₙR with at least one aliphatic, aliphatic/aromatic or aromatic alcohol (B) having at least 3 OH groups by elimination of alcohols ROH, where each R is independently a straight chain or branched aliphatic, aromatic-aliphatic or aromatic hydrocarbyl radical having 1 to 20 carbon atoms and the R radicals may also be bonded to each other to form a ring comprising the grouping - O[(CO)O]ₙ-, where n is an integer from 1 to 5,
or
a2) reacting phosgene, diphosgene or triphosgene with the aliphatic, aliphatic/aromatic or aromatic alcohol (B) to liberate hydrogen chloride,
the quantitative ratio of the alcohols (B) to the carbonates (A) or to the phosgenes in the reaction mixture being so chosen that the condensation products (K) comprise on average either one carbonate or carbamoyl chloride group and more than one OH group or one OH group and more than one carbonate or carbamoyl chloride group,
and
b) intermolecularly reacting the condensation products (K) from step a),
as a dispersant for a pigment.

2. A pigment preparation comprising
(I) at least one pigment
and
(II) at least one high functionality hyperbranched polycarbonate according to claim 1 as a dispersant.

3. The pigment preparation according to claim 2 that comprises 1% to 50% by weight of component (II), based on the weight of the preparation.

4. The pigment preparation according to claim 2 that comprises 80% to 99% by weight of component (I) and 1% to 20% by weight of component (II).

5. The pigment preparation according to claim 2 that comprises 50% to 95% by weight of component (I) and 5% to 50% by weight of component (II).

6. A process for producing a pigment preparation according to claim 4 or 5, which comprises said pigment (I) and said dispersant (II) being conjointly subjected to a comminution in the presence of a liquid medium or in the dry state and if appropriate the liquid medium being subsequently removed.

7. The process according to claim 6 wherein said pigment (I) is initially subjected to a wet comminution in an aqueous suspension comprising at least a portion of said dispersant (II) and then said suspension being dried, if appropriate after addition of the remainder of dispersant (II).

8. The use of a pigment preparation according to claims 2 to 5 for coloration of a liquid application medium.

9. The use according to claim 8 wherein the liquid application medium is a coating, an ink, a prinking ink or a finish system where the liquid phase comprises water, an organic solvent or a mixture of water and an organic solvent.

10. The use of a pigment preparation according to claims 2 to 5 for coloration of a plastic.

## Revendications

1. Utilisation de polycarbonates hautement fonctionnels, hautement ou hyperramifiés, pouvant être obtenus par
a) fabrication d'un ou de plusieurs produits de condensation (K) différents par
a1) mise en réaction d'au moins un carbonate organique (A) de formule générale RO[(CO)O]ₙR avec au moins un alcool (B) aliphatique, aliphatique/aromatique ou aromatique, qui comporte au moins 3 groupes OH, avec élimination d'alcools ROH, les R représentant, à chaque fois indépendamment les uns des autres, un radical hydrocarboné linéaire ou ramifié, aliphatique, aromatique/aliphatique ou aromatique, de 1 à 20 atomes C, les radicaux R pouvant également être reliés les uns aux autres en formant un cycle qui contient le groupe -O[(CO)O]ₙ-, et n signifiant un nombre entier de 1 à 5,
ou
a2) mise en réaction de phosgène, de diphosgène ou de triphosgène avec l'alcool (B) aliphatique, aliphatique/aromatique ou aromatique avec libération de chlorure d'hydrogène,
le rapport entre les quantités des alcools (B) et des carbonates (A) ou des phosgènes dans le mélange réactionnel étant choisi de manière à ce que les produits de condensation (K) comportent en moyenne un groupe carbonate ou chlorure de carbamoyle et plus d'un groupe OH ou un groupe OH et plus d'un groupe carbonate ou chlorure de carbamoyle,
et
b) transformation intermoléculaire des produits de condensation (K) formés à l'étape a),
en tant qu'agents de dispersion pour pigments.

2. Préparations de pigments, contenant
(I) au moins un pigment
et
(II) au moins un polycarbonate hautement fonctionnel, hautement ou hyperramifié selon la revendication 1 en tant qu'agent de dispersion.

3. Préparations de pigments selon la revendication 2, qui contiennent 1 à 50 % en poids du composant (II), par rapport au poids de la préparation.

4. Préparations de pigments selon la revendication 2, qui contiennent 80 à 99 % en poids du composant (I) et 1 à 20 % en poids du composant (II).

5. Préparations de pigments selon la revendication 2, qui contiennent 50 à 95 % en poids du composant (I) et 5 à 50 % en poids du composant (II).

6. Procédé de fabrication de préparations de pigments selon la revendication 4 ou 5, **caractérisé en ce que** le pigment (I) et l'agent de dispersion (II) sont soumis ensemble à un broyage en présence d'un milieu liquide ou à l'état sec, puis le milieu liquide est éventuellement éliminé.

7. Procédé selon la revendication 6, **caractérisé en ce que** le pigment (I) est tout d'abord soumis à un broyage humide dans une suspension aqueuse contenant au moins une partie de l'agent de dispersion (II), puis la suspension est séchée, éventuellement après ajout de la quantité restante de l'agent de dispersion (II).

8. Utilisation de préparations de pigments selon les revendications 2 à 5 pour la coloration de milieux d'application liquides.

9. Utilisation selon la revendication 8, **caractérisée en ce que** les milieux d'application liquides sont des laques, des encres d'impression, des encres ou des systèmes de revêtement, qui contiennent en tant que phase liquide de l'eau, des solvants organiques ou des mélanges d'eau et de solvants organiques.

10. Utilisation de préparations de pigments selon les revendications 2 à 5 pour la coloration de plastiques.
